(19)

Europäisches
Patentamt

European
Patent Office

Office européen
des brevets

(11) **EP 2 797 305 B1**

(12) **EUROPEAN PATENT SPECIFICATION**

(45) Date of publication and mention
of the grant of the patent:
**21.02.2018 Bulletin 2018/08**

(51) Int Cl.:
***H04N 1/60*** *(2006.01)*

(21) Application number: **13002223.9**

(22) Date of filing: **26.04.2013**

(54) **Method for mapping colours in digital documents**

Verfahren zur Abbildung von Farben in digitalen Dokumenten

Procédé de mappage de couleurs dans des documents numériques

(84) Designated Contracting States:
**DE FR GB NL**

(43) Date of publication of application:
**29.10.2014 Bulletin 2014/44**

(73) Proprietor: **Canon Kabushiki Kaisha**
**Tokyo 146-8501 (JP)**

(72) Inventors:
• **Van der Linden, Erwin Adrianus Richardus**
**5971 GC Grubbenvorst (NL)**
• **Luttmer, Maurice Lambert Martin**
**5941 GX Velden (NL)**

• **Verhelst, Paulus Wilhelmus Eugenius**
**5932 SK Tegelen (NL)**

(74) Representative: **Draaisma, Henricus Johannes**
**George**
**OCE-TECHNOLOGIES B.V.**
**PPP Intellectual Property**
**P.O. Box 101**
**5900 MA Venlo (NL)**

(56) References cited:
**US-A1- 2005 157 346     US-A1- 2005 168 761**
**US-A1- 2007 139 671     US-A1- 2010 045 987**
**US-A1- 2010 182 659**

**Description**

BACKGROND OF THE INVENTION

1. Field of the invention

The present invention relates to a method for mapping a colour in a digital document, the digital document containing an object with a solid colour. The present invention further relates to a print controller for receiving and scheduling print jobs for printing.

2. Description of the Related Art

Digital printing includes a wide range of applications, extending from a simple document submission to a desktop printer or a local printer to subcontracting a print provider for printing documents following a professional workflow. Printing colour documents has become part of the daily routine. However, whether the printed colours correspond to the intended colours Is, depending on the application, a matter that may still lead to surprises. Although more and more well defined procedures lead to an increasing conformity between expectation and accomplishment in colour printing, the abundance of possibilities regularly cause divergence between the two. Patent application US 2010/0045987 discloses a method allowing a user to interact with specific areas of selected print job and to identify user-selected critical colours within the print job. A critical colour test pattern including a patch for each of the critical colours is generated and printed along with the print job. The printed critical colour test pattern is measured automatically to determine the actual printed colours. Colours in documents occur in many ways, Depending on the software application that is used to generate a document, colours may be defined in colour spaces like RGB and CMYK, that need further specification, e.g, in the form of a colour profile or a device link, to be interpreted correctly, or in absolute colour spaces like sRGB, CIEL*a*b*, and CIEXYZ that supply an absolute determination of an intended colour, or, alternatively, as standardised colours according to an industry, proprietary, or organisational colour classifications system, such as Pantone®, Toyo, DIC, and HKS. These colour classification schemes are standardised named colour spaces, wherein each separate colour is associated with a name or a label and, optionally, a tint, with a default value of 100%, in contrast with colour spaces wherein colours have multiple components varying between a minimum and maximum value. Besides standardised named colour spaces, also dedicated named colour spaces exist, that combine spot colour names that have limited application, such as in a single document, or in documents of a single software application.

A document may contain numerous elements, or objects, that make up the contents of the document. These objects comprise text, lines, shapes and image objects. Image objects are raster Images having pixels, each pixel being characterised by a colour in a colour space. Other objects comprise vector information wherein the colour is defined either as a solid colour, which is a single colour for the complete object, or as a blend colour, which Indicates that the colour varies within the object. Different objects within the same document may apply colours according to different colour schemes. Depending on the software application and the definitions applied by a user, a dedicated named colour space may be defined within a document, e.g. defining a colour scheme of house style colours.

A print system applies a number of process colours to print colour documents. The process colours usually comprise cyan (C), magenta (M), yellow (Y), and black (K) colorants in the form of toner or ink, but also other process colour sets exist. In order to derive a suitable combination of these process colours for printing a document colour, a print controller, also known as a digital front end, contains modules to convert a digital document into an image suitable for printing. These modules include an interpreter for converting document objects to a limited set of standard elements which are collected in a display list, a renderer or rasterizer for converting the vector information into a raster format, and a colour management module (CMM) for separating a required colour in process colour components. Both colour profiles, that characterize individual input and output devices with regard to their colour rendering properties, device links, that provide a direct transform for converting input device colours to output device colours, and spot color libraries, comprising named colour spaces and their associated colorant usage, are commonly supported in a CMM.

Given the availability of the plethora of options for defining and processing colours, it would be amazing if no errors would take place. Unfortunately, errors do take place. A print provider, having to deal with several customers, each customer using miscellaneous software applications, will try to make arrangements for his print systems to deal with a variety of print jobs that is offered to him. In particular, he will deliberate in what way colours of an intended quality will be brought about. Existing software applications are not always capable to fulfill the requirements of the print systems, such as an appropriate use of spot colour names, which provides the most consistent way to define a solid colour of an object. Therefore, there is a problem when a customer has a print job with a particular intended solid colour of an object in a digital document, which is incompatible with the document processing of a print system. An object of the present invention is to provide a method to overcome this problem.

## SUMMARY OF THE INVENTION

According to the present invention, the abovementioned object is achieved by a method according to claim 1. Any solid colour in the digital document may be substituted by an associated spot colour name, which occurs in a spot colour library In the print controller. Therefore, without using the software application that generated the print job, colour consistency, or similarity between an intended and accomplished colour, of various solid colours in the document may be brought about. Thus, the invention solves the problem noted above.
In a further embodiment, the source colour and the associated spot colour name are obtained from a colour mapping group, that comprises one or more pairs of a source colour and associated spot colour name. This colour mapping group may be predefined and selected for a particular print job, for a particular customer, or for particular software applications. In that way, several solid colour substitutions for a single print Job can be conveniently assembled and exchanged between print systems.

In a further embodiment, the colour mapping group comprises a first source colour in a first colour space and a second source colour in a second colour space, which is different from the first colour space. Objects in a document may originate from different software applications and consequently their colours may be defined in different ways. By making these differently defined colours part of a single colour mapping group, several substitutions are done, without dependence on a particular colour space, which adds to the convenience of using a colour mapping group. A first and a second colour space may be distinguished by an associated profile. A profile contains characteristic data for converting the components of a colour. Therefore, it characterises a colour space wherein a colour Is defined. However, a source colour space may also be a named colour space. It is advantageous to convert occurring spot colour names to spot colour names that are defined in a spot colour library present in the print controller. In that way, there is no need for customizing the spot colour libraries In the print controller, which is beneficial for the transparency of the print system. Another possibility is the first colour space being an RGB colour space and the second colour space being a CMYK colour space. These colour spaces are readily distinguished by the number of components that is attributed to a source colour.

In a further embodiment, a spot colour name is associated with at least three source colours, one in an RGB colour space, one in a CMYK colour space, and one in a named colour space. This Improves colour consistency for a solid colour that, although defined in different ways, is intended to refer to one and the same colour. Furthermore, a tint of 100% is used for the target spot colour, if the spot colour name is associated with a source colour in an RGB colour space or a CMYK colour space, whereas a tint of the solid colour in the document is used, if the spot colour name is associated with a source colour in a named colour space. A tint for a spot colour is 100% by default. If a solid colour is defined in a document by a spot colour name, a tint may be specified in the document, which is copied for the target spot colour. In that way, If the same spot colour name is used as the source and target colour, the tint value in the document is not lost.

In a further embodiment, a tolerance range is associated with the source colour for determining if the solid colour is in accordance with the source colour. An exact correspondence between the solid colour in the document and the source colour is not always convenient. A tolerance range indicates how much difference between the two is allowed to establish the accordance. A tolerance range may be used for a function of the components, Indicating a colour difference, but also for each of the components of the source colour separately. A tolerance range for a colour compont indicates how much difference between a solid colour component and a source colour component is allowed. This contributes to the accuracy of the accordance relation.

The present invention may be embodied in a print controller for receiving and scheduling print jobs for printing, the print controller being configured to execute one of the indicated methods.

Further scope of applicability of the present Invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

## BRIEF DESCRIPTION OF THE DRAWINGS

The present invention will become more fully understood from the detailed description given hereinbelow and the accompanying drawings which are given by way of illustration only, and thus are not limitative of the present invention, and wherein:

Fig. 1     is the data flow of a print job for printing;
Fig. 2     is a user interface to specify the colour settings of the data processing;
Fig. 3     is a diagram showing a number of modules for the data processing; and
Fig. 4     is a print controller for executing a method according to the present invention.

DETAILED DESCRIPTION OF EMBODIMENTS

The present invention will now be described with reference to the accompanying drawings, wherein the same or similar elements are identified with the same reference numeral.

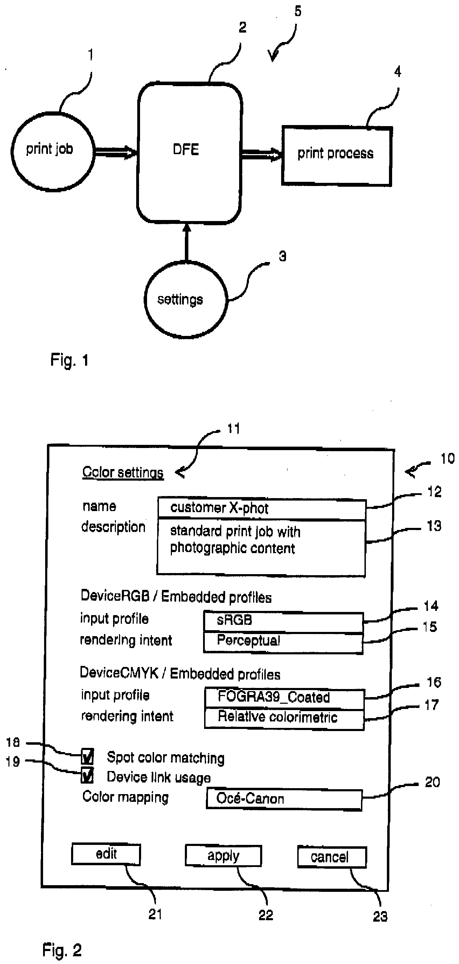

In Fig.1. the data flow of a print job 1 in a print system 5 Is shown. This print job or digital document may be presented through a network or a medium for holding digital data, such as solid state memory or a disc. A digital front end 2 is configured for receiving and processing the print job data. Settings 3 are provided, either with the print job 1 or separately by a user of the print system, to adapt the processing method to the print Job requirements. These settings may include whether double sided printing is required, whether colour is involved, a medium type that is to be used as receiving material, a required enlargement of the printed output and further parameters that affect the printed output that is obtained when the processed data are sent to the print process 4. The indicated data flow is a common way of printing digital documents.

Fig. 2 shows a user interface 10 that may be applied to edit and revise a number of colour settings that are part of the settings 3. The title 11 indicates the nature of the settings in this selected user interface. The name 12 indicates a name for the set of parameters that is obtained from a memory in the digital front end 2, along with a description 13 for describing the type of print job for which these settings are convenient. An Input profile 14 and required rendering intent 15 for RGB data that have no profile data in the document, also known as embedded profile, is specified. By default, an embedded profile is used if available, but this may be overruled, depending on a setting in another user interface. For CMYK data in the document, an input profile 16 and rendering intent 17 are provided in the same way. The setting 18 Is used to specify that spot colour names are matched according to their definition in available spot colour libraries to a process colour mixture that leads to a most similar colour that is obtainable with the current print process 4. The setting 19 is used to indicate that a device link is applied, if possible, to accelerate the color conversion. A colour mapping group 20 is used to define the colour mapping according to the present invention that is applied to process the document data. All these parameters may be edited in an edit mode by selecting 21, or applied as specified by selecting 22. The user interface may also be left without changing anything by selecting 23.

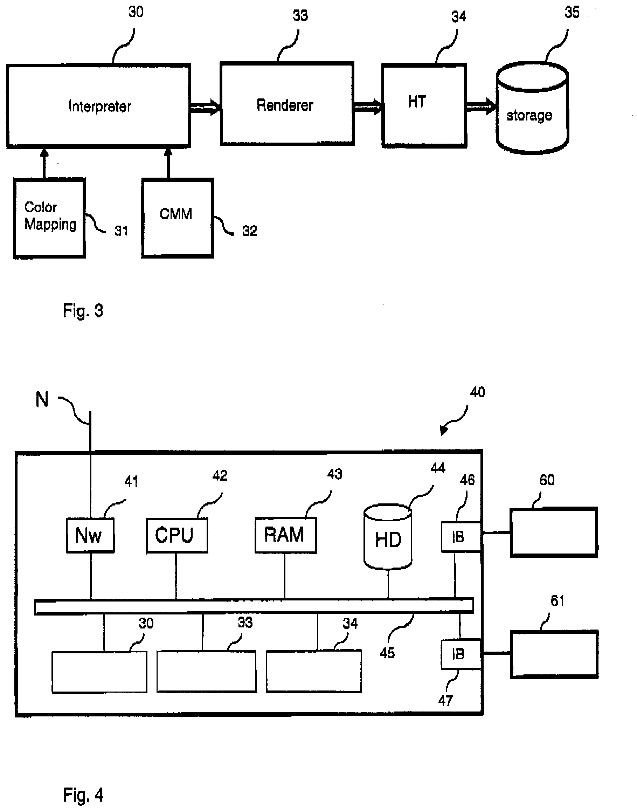

Fig. 3 shows a number of modules that are applied for processing the print job data. A first module is the interpreter 30 that converts the object description commands into graphics commands that are assembled in a display list. If colour mapping is applied (cf. colour setting 20 in Fig. 2, where "None" would indicate no colour mapping), the indicated colour mapping group is consulted by the colour mapping module 31 for converting solid colours occurring in the document. As a second step, the colour management module 32 Is invoked for converting colours into the amounts of process colours by using predefined output colour profiles, device link profiles, and spot colour libraries. The display list is passed to the renderer 33 for generating a raster Image wherein the pixels have colour components that Indicate the amount of process colours to be applied. The halftoning module 34 is involved for halftoning and compression and other image processing methods that may be applied. The print data are stored in a memory 35 to be scheduled for printing in the print process 4. The colour mapping module 31 is well separated from the colour management module 32, making the print system transparent with regard to its colour settings.

The colour mapping group that is consulted by the colour mapping module 31 associates a source colour with a spot colour name. Thus, pairs of colours are realised, such as shown in Table 1.

Table 1. A colour mapping group with six pairs of source colours and associated spot colour names as target colours; a comment field is added for convenience.

| source colour | target colour | comment |
| --- | --- | --- |
| RGB = 200,140,150 | SCD324 | house style |
| CMYK = 10,80,50,10 | SCD324 | house style |
| company | SCD324 | house style |
| RGB(255,0,0) | SCD003 | red |
| CMYK(0,255,255,0) | SCD003 | red |
| red | SCD003 | red |

In the first column of Table 1 a source colour is specified which may occur as a solid colour for an object in a document. A source colour may be given in any kind of colour space, such as an RGB, a CMYK or a named colour space, respectively line 1 and 4, line 2 and 5, and line 3 and 6. Alternatively, a source colour space may be identified by a profile identifier for discriminating various RGB colour spaces, such as sRGB and AdobeRGB. The same applies for CMYK colour spaces. In one embodiment, the colour components of a solid colour have to match exactly the colour components of the source colour In the colour mapping group. In another embodiment, an additional parameter indicates a limit L that indicates a maximum difference or tolerance range between a source colour and a solid colour in the document. E.g. a solid colour ($R_D$, $G_D$, $B_D$) is then considered to be in accordance with a source colour ($R_S$, $G_S$, $B_S$), if

$$(R_D - R_S)^2 + (G_D - G_S)^2 + (B_D - B_S)^2 \le L^2 . \qquad (1)$$

Each colour pair may thus be associated with a different tolerance range. In another embodiment, the individual components are associated with separate limits. For an RGB colour space, this would be a limit having three components $L_R$, $L_G$, and $L_B$. An accordance between an solid colour ($R_D$, $G_D$, $B_D$) and ($R_S$, $G_S$, $B_S$) is then found if

$$(R_D - R_S)^2 \le L_R^2 , \text{ and } (G_D - G_S)^2 \le L_G^2 , \text{ and } (B_D - B_S)^2 \le L_B^2 . \qquad (2)$$

A tolerance range for CMYK values may be used similarly.

Another embodiment of the present invention Is given in Table 2. A source colour has up to three attributes and a target colour has up to two attributes. A solid colour in a document is compared to the source colour if their profiles match. If no profile is specified, there is no restriction on the colour space, as long as the number of components of the source colour and the solid colour match. A tolerance indicates a range for the difference between the solid colour and the source colour, as described above. No range means that the colours should match exactly. A colour name does not have a tolerance or profile attribute. A target colour specifies a name in a named colour space that is present in the spot colour library that is referenced by the colour management module 32. A tint value indicates the amount of the spot colour to be applied.

Table 2. A second colour mapping group with five pairs of source colours and associated spot colour names.

| source colour | | | target colour | | comment |
|---|---|---|---|---|---|
| *Colour spec* | *Tolerance* | *ICC profile* | *Spot color name* | *Tint value* | |
| 200,140,150 | $L_R=L_G=L_B=5$ | sRGB | SCD324 | 100% | house style |
| 20,120,70,18 | | FOGRA39 | SCD324 | 80% | house style |
| company | | | SCD324 | | house style |
| RGB(255,0,0) | $L_R=L_G=0$, $L_B=5$ | | SCD003 | 100% | red |
| CMYK(0,170,170,0) | | FOGRA39 | SCD003 | 70% | light red |

If the colour mapping module 31 finds an accordance between a solid colour in the document and a source colour in the colour mapping group, it substitutes the solid colour by the target colour of the colour pair. The target colour is a name that corresponds to a spot colour name that appears in a spot colour library that is used by the colour management module 32. Therefore, all solid colours occurring in a document may be mapped to a spot colour for enhancing the colour accuracy.

A spot colour is often used with a tint value in a range of 0% to 100%. If no value is specified, 100% is used by default. A further parameter associated with a colour pair may be a tint value for the target colour. When a solid colour matches a source colour in a named colour space, the tint value that is specified in the document is applied. For source colours In other colour spaces, a tint value that is specified with the target colour may be used. If no tint value is specified, a tint value of 100% is applied.

In Fig. 4, a print controller 40, which acts as a digital front end 2, is shown. The print controller is connected to two print engines 60 and 61. The print engines have different sets of process colours for reproducing full colour images. The print controller 40 is connected to a network N. A network board 41 receives data, such as a print job 1 and settings 3, from the network. The system bus 45 transports the data from and to different modules in the print controller, according to a standard personal computer architecture. Further provided are a central processing unit 42, a volatile memory 43 and a non-volatile memory 44. The CPU 42 controls the flow of the image data in the print controller, employing the interpreter module 30, the renderer module 33, and the halftoning moduIe 34. After processing the image data to print data, these print data are saved in the non-volatile memory 44 in a losslessly compressed form to save memory access time and space. When a print job is scheduled for printing, the print data are sent to the appropriate one of the interface boards 46 and 47. These are configured to decompress the print data that are sent to an associated print engine. The interpreter module 30 receives the objects of the document and substitutes the solid colours following a method according to the present invention. Then, the interpreter module composes a display list with graphical elements using a colour management module for separating a required colour in process colour components. The renderer module 33 produces the pixels of a raster image that is part of the print data, which are further processed and printed in a familiar way. The invention being thus described, it will be obvious that the same may be varied in many ways. Such variations are not to be regarded as a departure from the scope of the invention, and all such modifications as would be obvious to one skilled in the art are intended to be included within the scope of the following claims.

**Claims**

1. A method for mapping a colour in a digital document to a spot colour name, the digital document containing an object with a solid colour, the method comprising the steps of:

   - receiving a digital document, containing objects; and
   - obtaining a source colour and an associated spot colour name by referring to a predetermined list of colours, the predetermined list including information on a source colour and a spot colour name to be associated with the source colour;

   **characterized in that** the method additionally comprises the steps of:

   - inspecting each of the objects in the digital document to determine whether it has a solid colour in accordance with the source colour;
   - substituting the solid colour by the associated spot colour name, if the result of the step of inspecting is true; and
   - leaving the colour of the object as it is, if the result is false.

2. The method according to claim 1, wherein the source colour and the associated spot colour name are obtained from a colour mapping group, that comprises one or more pairs of a source colour and an associated spot colour name.

3. The method according to claim 2, wherein the colour mapping group comprises a first source colour in a first colour space and a second source colour in a second colour space, which is different from the first colour space.

4. The method according to claim 3, wherein the first and second colour spaces are distinguished by a profile that is associated to each of the colour spaces.

5. The method according to claim 3, wherein at least one of the first and second colour space is a named colour space.

6. The method according to claim 3, wherein the first colour space is an RGB colour space and the second colour space is a CMYK colour space.

7. The method according to claim 6, wherein a spot colour name is associated with at least three source colours, one in an RGB colour space, one in a CMYK colour space, and one in a named colour space.

8. The method according to claim 7, wherein a tint of 100% is used, if the spot colour name is associated with a source colour in an RGB colour space or a CMYK colour space, whereas a tint of the solid colour in the document is used, if the spot colour name is associated with a source colour in a named colour space.

9. The method according to claim 1, wherein a tolerance range is associated with the source colour for determining if the solid colour is in accordance with the source colour.

10. The method according to claim 9, wherein a tolerance range is associated with each component of the source colour.

11. A print controller for receiving and scheduling print jobs for printing, the print controller being configured to execute a method according to claim 1.

**Patentansprüche**

1. Verfahren zum Abbilden einer Farbe in einem digitalen Dokument auf einen Namen einer Spotfarbe, wobei das digitale Dokument ein Objekt mit einer flächenfüllenden Farbe aufweist, welches Verfahren die folgenden Schritte umfasst:

- Empfangen eines digitalen Dokuments, das Objekte enthält; und
- Aufsuchen einer Quellfarbe und eines zugehörigen Namens einer Spotfarbe durch Bezugnahme auf eine vorbestimmte Liste von Farben, wobei die vorbestimmte Liste Informationen über eine Quellfarbe und über einen Namen einer Spotfarbe enthält, welcher der Quellfarbe zugeordnet werden soll;

**dadurch gekennzeichnet, dass** das Verfahren zusätzlich die folgenden Schritte umfasst:

- Untersuchen jedes der Objekte in dem digitalen Dokument, um zu entscheiden, ob es eine mit der Quellfarbe übereinstimmende flächenfüllende Farbe hat;
- Substituieren der flächenfüllenden Farbe durch den zugehörigen Namen der Spotfarbe, wenn das Ergebnis der Entscheidung in dem Schritt der Untersuchung "wahr" ist; und
- Lassen der Farbe des Objekts wie sie ist, wenn das Ergebnis "falsch" ist.

2. Verfahren nach Anspruch 1, bei dem die Quellfarbe und der zugehörige Name der Spotfarbe aus einer Farbabbildungsgruppe erhalten werden, die eine oder mehrere Paare aus jeweils einer Quellfarbe und einem zugehörigen Namen einer Spotfarbe enthält.

3. Verfahren nach Anspruch 2, bei dem die Farbabbildungsgruppe eine erste Quellfarbe in einem ersten Farbraum und eine zweite Quellfarbe in einem zweiten Farbraum aufweist, der von dem ersten Farbraum verschieden ist.

4. Verfahren nach Anspruch 3, bei dem die ersten und zweiten Farbräume durch ein Profil gekennzeichnet sind, das jedem der Farbräume zugeordnet ist.

5. Verfahren nach Anspruch 3, bei dem wenigstens einer der ersten und zweiten Farbräume ein namentlich benannter Farbraum ist.

6. Verfahren nach Anspruch 3, bei dem der erste Farbraum ein RGB-Farbraum und der zweite Farbraum ein CMYK-Farbraum ist.

7. Verfahren nach Anspruch 6, bei dem ein Name einer Spotfarbe wenigstens drei Quellfarben zugeordnet ist, einer in einem RGB-Farbraum, einer in einem CMYK-Farbraum und einer in einem namentlich benannten Farbraum.

8. Verfahren nach Anspruch 7, bei dem eine Farbtönung von 100% benutzt wird, wenn der Name der Spotfarbe einer Quellfarbe in einem RGB-Farbraum oder einem CMYK-Farbraum zugeordnet ist, wohingegen eine Tönung der flächenfüllenden Farbe in dem Dokument benutzt wird, wenn der Name der Spotfarbe einer Quellfarbe in einem namentlich benannten Farbraum zugeordnet ist.

9. Verfahren nach Anspruch 1, bei dem der Quellfarbe ein Toleranzbereich für die Entscheidung zugeordnet ist, ob die flächenfüllende Farbe mit der Quellfarbe übereinstimmt.

10. Verfahren nach Anspruch 9, bei dem jeder Komponente des Farbraums ein Toleranzbereich zugeordnet ist.

11. Steuereinrichtung für einen Drucker, zum Empfang und Planen von Druckaufträgen zum Drucken, wobei die Steuereinrichtung dazu konfiguriert ist, ein Verfahren nach Anspruch 1 auszuführen.

## Revendications

1. Procédé de mise en correspondance d'une couleur dans un document numérique avec un nom de couleur d'accompagnement, le document numérique contenant un objet avec une couleur en aplat, le procédé comprenant les étapes consistant à :

- recevoir un document numérique, contenant des objets ; et
- obtenir une couleur source et un nom de couleur d'accompagnement associé en se référant à une liste prédéterminée de couleurs, la liste prédéterminée incluant des informations sur une couleur source et un nom de couleur d'accompagnement à associer à la couleur source ; **caractérisé en ce que** le procédé comprend en outre les étapes consistant à :

- inspecter chacun des objets dans le document numérique pour déterminer s'il a une couleur en aplat en accord avec la couleur source ;
- substituer la couleur en aplat par le nom de couleur d'accompagnement associé, si le résultat de l'étape d'inspection est vrai ; et
- laisser la couleur de l'objet telle qu'elle est, si le résultat est faux.

2. Procédé selon la revendication 1, dans lequel la couleur source et le nom de couleur d'accompagnement associé sont obtenus à partir d'un groupe de mise en correspondance de couleurs, qui comprend une ou plusieurs paires d'une couleur source et d'un nom de couleur d'accompagnement associé.

3. Procédé selon la revendication 2, dans lequel le groupe de mise en correspondance de couleurs comprend une première couleur source dans un premier espace de couleurs et une seconde couleur source dans un second espace de couleurs, qui est différent du premier espace de couleurs.

4. Procédé selon la revendication 3, dans lequel les premier et second espaces de couleurs se distinguent par un profil qui est associé à chacun des espaces de couleurs.

5. Procédé selon la revendication 3, dans lequel au moins un des premier et second espaces de couleurs est un espace de couleurs nommé.

6. Procédé selon la revendication 3, dans lequel le premier espace de couleurs est un espace de couleurs RVB et le second espace de couleurs est un espace de couleurs CMJN.

7. Procédé selon la revendication 6, dans lequel un nom de couleur d'accompagnement est associé à au moins trois couleurs sources, une dans un espace de couleurs RVB, une dans un espace de couleurs CMJN, et une dans un espace de couleurs nommé.

8. Procédé selon la revendication 7, dans lequel une teinte de 100 % est utilisée, si le nom de couleur d'accompagnement est associé à une couleur source dans un espace de couleurs RVB ou un espace de couleurs CMJN, alors qu'une teinte de la couleur en aplat dans le document est utilisée, si le nom de couleur d'accompagnement est associé à une couleur source dans un espace de couleurs nommé.

9. Procédé selon la revendication 1, dans lequel une gamme de tolérance est associée à la couleur source pour déterminer si la couleur en aplat est en accord avec la couleur source.

10. Procédé selon la revendication 9, dans lequel une gamme de tolérance est associée à chaque composant de la couleur source.

11. Contrôleur d'impression pour recevoir et planifier des travaux d'impression pour imprimer, le contrôleur d'impression étant configuré pour exécuter un procédé selon la revendication 1.

**Fig. 1**

**Fig. 2**

30

33

34

35

```
┌──────────────────┐      ┌──────────────┐      ┌──────────┐      ┌──────────┐
│                  │      │              │      │          │      │          │
│   Interpreter    │ ══▶  │   Renderer   │ ══▶  │    HT    │ ══▶  │ storage  │
│                  │      │              │      │          │      │          │
└──────────────────┘      └──────────────┘      └──────────┘      └──────────┘
        ▲        ▲
        │        │
┌──────────┐  ┌──────────┐
│  Color   │  │          │
│ Mapping  │  │   CMM    │
│          │  │          │
└──────────┘  └──────────┘
        31           32
```

Fig. 3

N

40

41    42    43    44   46    60

```
┌───────────────────────────────────────────────────┐
│                                                     │
│  ┌────┐   ┌──────┐   ┌──────┐   ┌────┐   ┌────┐     │      ┌────────┐
│  │ Nw │   │ CPU  │   │ RAM  │   │ HD │   │ IB │     │──────│        │
│  └────┘   └──────┘   └──────┘   └────┘   └────┘     │      └────────┘
│    │        │          │          │       │         │
│  ════════════════════════════════════════════       │
│    │        │          │            45    │         │      ┌────────┐
│  ┌──────┐ ┌──────┐  ┌──────┐          ┌────┐        │──────│        │
│  │      │ │      │  │      │          │ IB │        │      └────────┘
│  └──────┘ └──────┘  └──────┘          └────┘        │
│    30       33        34                47          │
└───────────────────────────────────────────────────┘
```

Fig. 4

**EP 2 797 305 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100045987 A